# EUROPÄISCHE PATENTANMELDUNG

(11) **EP 0 807 623 A2**
(43) Veröffentlichungstag der Anmeldung: **19.11.1997**
(21) Anmeldenummer: 97106777.2
(22) Anmeldetag: 24.04.1997
(51) Int. Cl.: C07C 275/60, C07C 273/18, C08G 18/78

(54) **Verfahren zur Herstellung Heteroallophanatgruppen enthaltende TDI-Polyisocyanate und deren Verwendung**

(30) Priorität: 07.05.1996 DE 19618230
(71) Anmelder: BAYER AG, 51368 Leverkusen (DE)
(72) Erfinder: Brahm, Martin, Dr., 51373 Leverkusen (DE); Schmalstieg, Lutz, Dr., 50676 Köln (DE); Arning, Eberhard, 41564 Kaarst (DE); Rettig, Rainer, Dr., 51789 Lindlar (DE); Schwindt, Jürgen, Dr., 51373 Leverkusen (DE)

(57) **Zusammenfassung**

Die Erfindung betrifft ein Verfahren zur Herstellung Allophanatgruppen enthaltender Polyisocyanate mit aromatisch gebundenen Isocyanatgruppen sowie deren Verwendung als Bindemittel in Beschichtungsmaterialien.

## Beschreibung

Die Erfindung betrifft ein Verfahren zur Herstellung Allophanatgruppen enthaltender Polyisocyanate mit aromatisch gebundenen Isocyanatgruppen sowie deren Verwendung als Bindemittel in Beschichtungsmaterialien.

Allophanatgruppen enthaltende Polyisocyanate mit hochreaktiven, aromatisch gebundenen Isocyanatgruppen und daraus hergestellte Beschichtungsmittel sind seit langem bekannt (vgl. GB-A 994 980, US-A 3 769 318, 5 283 311, DE-A 2 009 179, 4 040 645 und 2 725 318). Die Herstellung derartiger Allophanatgruppen aufweisender Polyisocyanate erfolgt durch Reaktion überschüssiger Mengen aromatischer Diisocyanate mit mono- beziehungsweise polyfunktionellen Alkoholen oder Polymeralkoholen. Die Eigenschaften der entstandenen Produkte können je nach verwendetem Diisocyanat und Alkohol über einen weiten Bereich breit variiert werden. Nachteilig bei den Allophanatpolyisocyanaten des Standes der Technik ist jedoch ihre schlechte Thermostabilität, so daß die Umsetzungsprodukte unter den Bedingungen der Dünnschichtdestillation die eingebauten Diisocyanate abspalten, was eine vollständige Abtrennung des überschüssigen Diisocyanats im Anschluß an die Allophanatisierungsreaktion unmöglich macht. Aus arbeitsphysiologischer Sicht sind jedoch Produkte mit einem hohen Gehalt flüchtiger Isocyanate nicht akzeptabel.

Auch die in den oben aufgefährten Veröffentlichungen beschriebenen "Mischallophanate", hergestellt durch Reaktion von Hydroxylkomponenten mit einer Mischung aromatischer bzw. aliphatischer und aromatischer Diisocyanate zeigen die erforderliche Thermostabilität ebenfalls nicht. Ein weiterer Nachteil derartiger Polyisocyanate ist ihr mehrstufiger Trocknungs- und Vernetzungsmechanismus, hervorgerufen durch die im Polyisocyanat vorhandenen Isocyanatgruppen unterschiedlicher Reaktivität. Dies wird vor allem bei Mischallophanaten deutlich, die auf Basis von Mischungen aus aromatischen und aliphatischen Diisocyanaten hergestellt worden sind. Derartige Mischallophanate zeigen als Lackformulierung durch die hochreaktiven aromatischen Isocyanatgruppen eine relativ kurze Topfzeit, die Durchtrocknung der hergestellten Lackfilme sowie das Erreichen der Enteigenschaften ist jedoch durch die vorhandenen wenigreaktiven aliphatischen Isocyanatgruppen stark verzögert.

Aufgabe der vorliegenden Erfindung war es daher ein Verfahren zur Herstellung hochreaktiver, Allophanatgruppen enthaltender Polyisocyanate mit einheitlicher Reaktivität und niedrigem Monomerengehalt bereitzustellen, die eine ausreichende Thermostabilität aufweisen.

Wie jetzt gefunden wurde, ist es nach dem nachstehend näher beschriebenen erfindungsgemäßen Verfahren unter Verwendung einer linear aliphatischen Isocyanatkomponente für die Urethanisierung und Toluylendiisocyanat für die anschließende Allophanatisierung möglich, thermostabile Allophanatgruppen aufweisende Polyisocyanate herzustellen, die unterschiedliche Isocyanatgruppen in chemisch eingebauter Form enthalten und nachstehend als "Heteroallophanate" bezeichnet werden. Derartige Polyisocyanate weisen prinzipiell aromatische freie Isocyanatgruppen auf und zeigen somit nicht den aus HDI/TDI-Mischallophanaten bekannten Reaktivitätsunterschied.

Gegenstand der Erfindung ist ein Verfahren zur Herstellung Heteroallophanatgruppen enthaltender Polyisocyanatverbindungen mit aromatisch gebundenen Isocyanatgruppen, dadurch gekennzeichnet, daß eine
a) im wesentlichen isocyanatgruppenfreie Di- und/oder Polyurethankomponente, hergestellt aus
   a1) einer linear aliphatischen Isocyanatkomponente mit
   a2) organischen Hydroxylverbindungen einer OH-Funktionalität von im Mittel 1 bis 1,75 unter Allophanatbildung mit
b) einer Isocyanatkomponente die mindestens 90 Gew.-% 2,4- oder 2,6-Diisocyanatotoluol bzw. deren Mischungen enthält,
in einem Verhältnis von NCO- zu Urethangruppen von 3:1 bis 100:1 umgesetzt wird und im Anschluß die überschüssige destillierbare Monomerkomponente b) bis auf einen Gehalt von unter 0,5 % entfernt wird.

Gegenstand der Erfindung ist auch die Verwendung der Polyisocyanatverbindungen als Bindemittel für Beschichtungsmaterialien, Klebstoffe, Dichtstoffe und Polymerformkörper.

Die Urethangruppen aufweisenden Verbindungen a) sind im wesentlichen Isocyanatgruppen-frei. Dies soll bedeuten, daß der NCO-Gehalt der Verbindungen a) bei max. 2 %, vorzugsweise bei max. 0,5 % und insbesondere bei max. 0,2 % liegt. Dies wird im wesentlichen dadurch erreicht, daß bei der Herstellung der Verbindungen a) die Ausgangskomponenten a1) und a2) unter Einhaltung des NCO/OH-Äquivalentverhältnisses von 1,2:1 bis 1:2, vorzugsweise 1,1:1 bis 1:1,7 und besonders bevorzugt von 1:1 zur Umsetzung gebracht werden. Diese Urethanbildungsreaktion wird im allgemeinen innerhalb eines Temperaturbereichs von 20 bis 140°C, vorzugsweise 50 bis 120°C und besonders bevorzugt 70 bis 90°C, vorzugsweise in Substanz durchgeführt.

Die Isocyanatkomponente a1) besteht im wesentlichen aus linear aliphatischen Isocyanaten eines mittleren Molekulargewichts von 110 bis 1000, vorzugsweise 140 bis 340 mit einem NCO-Gehalt von 8 bis 75, vorzugsweise 22 bis 60 und insbesondere von 40 bis 60 Gew.-%. Die (mittlere) NCO-Funktionalität der Komponente a1) liegt bei 1,8 bis 4,0, vorzugsweise bei 2,0 bis 3,0 und besonders bevorzugt bei 2,0. Vorzugsweise besteht die Isocyanatkomponente ausschließlich aus Diisocyanaten.

Beispiele für linear aliphatische Diisocyanate sind 1,2-Diisocyanatoethan, 1,4-Diisocyanatobutan, 1,5- Diisocyanatopentan, 1,6-Diisocyanatohexan (HDI), 1,11-Diisocyanatoundecan, Dodecamethylendiisocyanat, Trimethyl-1,6-diisocyanatohexan sowie deren Gemische.

Die Verwendung von Ester- bzw. Ethergruppen enthaltenden Diisocyanaten ist ebenfalls möglich, jedoch weniger bevorzugt.

Die Mitverwendung von Monoisocyanaten wie beispielsweise Hexylisocyanat, 2-Ethylhexylisocyanat sowie andere Monoisocyanate mit 4 bis 18 Kohlenstoffatomen ist ebenfalls möglich, aber keineswegs bevorzugt.

Die Ausgangsisocyanate a1) können auch Modifizierungsprodukte der oben erwähnten Di- und Monoisocyanate mit Biuret-, Uretdion-, Isocyanurat-, Allophanat- und Carbodiimidgruppen darstellen.

Bevorzugt wird als Isocyanatkomponente a1) 1,6-Diisocyanatohexan oder 1,4-Butandiisocyanat gegebenenfalls im Gemisch eingesetzt, wobei ganz besonders bevorzugt 1,6-Diisocyanatohexan Verwendung findet.

Als Alkoholkomponente a2) können Alkohole mit einem mittleren Molekulargewicht von 32 bis 4000, vorzugsweise 60 bis 2000 und besonders bevorzugt von 70 bis 300 verwendet werden. Die mittlere Funktionalität der Alkoholkomponente a2) liegt bei 1 bis 1,75, vorzugsweise 1 bis 1,5 und besonders bevorzugt bei 1. Zur Anwendung kommen beispielsweise gesättigte Monoalkohole wie Methanol, Ethanol, n-Propanol, iso-Propanol, Methoxypropanol, isomere Butanole, Pentanole, Hexanole, n-Heptanole, n-Octanole, n-Nonanole, n-Decanole, n-Dodecanole, n-Octadecanol, ®Lorol-Alkohole (Henkel KGaA), gesättigte Fettalkohole (z. B. ®Stenol-Typen, ®Guerbitol-Typen der Henkel KGaA) und Gemische sowie höherwertige Polyolkomponenten wie beispielsweise Ethylenglykol, Propandiol-1,2 und - 1,3, Butandiol-1,4 und 1,3, Hexandiol-1,6, Octandiol-1,8, Nonandiol-1,9, Decandiol-1,10, Dodecandiol-1,12, Octadecandiol-1,12, Neopentylglykol, 1,4-Bis-hydroxymethylcyclohexan, 2-Methyl-1,3-propandiol, 2,2,4-Trimethylpentandiol-1,3, 2-Ethyl-1,3-hexandiol, Dimerfettalkohole, Trimerfettalkohole, Glycerin, Trimethylolpropan, Trimethylolethan, die isomeren Hexantriole und Pentaerythrit oder Sorbit.

Ebenfalls einsetzbar sind ungesättigte Alkohole wie Allylalkohol, Trimethylolpropandiallylether, Butendiol und monofunktionelle Alkohole, die sich von entsprechenden Säuren bzw. Säuregemischen aus ungesättigten synthetischen und natürlichen Fettsäuren ableiten(z.B. HD-®Ocenol-Typen der Henkel KGaA). Natürliche vorkommende Fettsäuregemische sind beispielsweise die aus Rizinusöl, Erdnußölfett, Baumwollsaatöl, Safloröl, Holzöl, Sojaöl, Sonnenblumenöl, Leinöl, Rüböl, Talöl, Spermöl und Heringsöl abgeleiteten Säuren.

Neben derartigen ungesättigten monofunktionellen Alkoholen können als Alkoholkomponente a2) auch Umsetzungsprodukte aus oben erwähnten ungesättigten Fettsäuren mit Epoxidverbindungen wie Ethylenoxid, Propylenoxid, Butylenoxid, Styroloxid und 2-Ethylhexyloxid Verwendung finden.

Desweiteren sind auch die Polymerpolyole mit Ether- und/oder Ester- und/oder Carbonatgruppen des Standes der Technik einsetzbar. Bevorzugt werden hierbei hydroxyfunktionelle Polyether auf Basis Propylenoxid und/oder Ethylenoxid eingesetzt.

Besonders bevorzugt werden ausschließlich monofunktionelle Alkohole eingesetzt, wobei hierbei Alkohole mit einer durchschnittlichen Kettenlänge von 12 bis 22 Kohlenstoffatomen bevorzugt ist.

Wie dargelegt erfolgt die Herstellung der Komponente a) durch Umsetzung der Einzelkomponenten a1) und a2) im Sinne einer Urethanbildungsreaktion. Grundsätzlich möglich, jedoch keineswegs bevorzugt, ist auch die Verwendung von Urethangruppen aufweisenden Verbindungen a) der oben genannten Art, die auf anderem Weg, beispielsweise nach einer an sich bekannten "phosgenfreien Urethansynthese" hergestellt worden sind, wie sie beispielsweise in EP-A 27 940, EP-A 27 952, EP-A 27 953, EP-A 323 514 und EP-A 355 443 beschrieben sind.

Als aromatische Diisocyanatkomponente b) wird 2,4- oder 2,6-Diisocyanatotoluol oder deren Mischungen eingesetzt. Vorzugsweise finden Mischungen mit mindestens 65 % 2,4-Diisocyanatotouol Anwendung.

Zur Erzielung spezieller Effekte können auch bis zu 10 Gew.-% anderer aromatischer oder aliphatischer Mono-, Di- und Polyisocyanate des Standes der Technik zur Diisocyanatkomponente b) zugesetzt werden. Dies ist jedoch keineswegs bevorzugt.

Die Reaktion der Urethankomponente a) mit der Diisocyanatkomponente b) erfolgt in einem NCO/Urethan-Äquivalentverhältnis von 3:1 bis 100:1 vorzugsweise von 4:1 bis 60:1 und besonders bevorzugt von 6:1 bis 30:1 in einem Temperaturbereich von 20°C bis 149°C, vorzugsweise 50°C bis 120°C und besonders bevorzugt 60°C bis 90°C, wobei vorzugsweise zur Beschleunigung der Allophanatisietungsreaktion übliche, Katalysatoren eingesetzt werden. Beispiele für einsetzbare Katalysatoren sind Tetraalkylammoniumhydroxide bzw. Arylalkylammoniumhydroxide, Metallsalze wie Eisen-(III)-chlorid, Kaliumoctoat, Zinkverbindungen wie Zinkstearat, Zinkoctoat, Zinknaphthenat, Zinkacetylacetonat, Zinnverbindungen wie Zinn-(II)-octoat, Zinn-(II)-ethylhexanoat, Zinn-(II)-laurat, Aluminium-tri(ethlylacetoacetat), Dibutylzinnoxid, Dibutylzinndichlorid, Dibutylzinndiacetat, Dibutylzinndilaurat, Dibutylzinnmaleat oder Dioctylzinndiacetat, Mangan-, Cobalt- und Nickelverbindungen sowie Mineralsäuren wie Trifluoressigsäure, Schwefelsäure, Chlorwasserstoff, Bromwasserstoff, Phosphorsäure und Perchlorsäure und beliebige Gemische. Bei der Reaktion von Urethangruppen mit Isocyanatverbindungen sind jedoch starke Säuren, wie unter EP 000 194 weniger bevorzugt. Besonders bevorzugt werden als Katalysatoren zur Allophanatbildung Zinkverbindungen eingesetzt.

Die Katalysatoren können vor der Allophanatisietungsreaktion oder auch schon vor der Urethanisierung zugesetzt werden. Sie kommen in Konzentrationen von 0,001 % bis 5 %, vorzugsweise 0,004 % bis 1 % zum Einsatz. Der Katalysator kann, wenn möglich, destillativ aus dem Reaktionsansatz entfernt werden. Es kann jedoch auch sinnvoll sein, durch geeignete Katalysatorgifte, wie Säurechloride, Alkylierungsmittel seine katalytische Wirkung zu stoppen.

Im Anschluß an die Umsetzung wird das überschüssige, destillierbare Ausgangsdiisocyanat b) vorzugsweise durch Dünnschichtdestillation bis auf einen Restgehalt im Verfahrensprodukt von unter 0,5, vorzugsweise unter 0,2 Gew.-% entfernt.

Je nach Viskosität der erhaltenen erfindungsgemäßen Produkte kann es sinnvoll sein diese mit inerten Lösungsmittel bis auf einen Festkörpergehalt von ca. 50 % vorzugsweise 80 % zu verdünnen. Hierfür geeignete Lösungsmittel sind beispielsweise Toluol, Xylol, Cyclohexan, Chlorbenzol, Butylacetat, Ethylacetat, Ethylglykolacetat, Pentylacetat, Hexylacetat, Methoxypropylacetat, Tetrahydrofuran, Dioxan, Aceton, Methylethylketon, Testbenzin, höher substituierte Aromaten, wie beispielsweise unter der Bezeichnung Solvent Naphtha®, Solvesso®, Shellsol®, Isopar®, Nappar®, und Diasol^{R} im Handel, Schwerbenzol, Tetralin, Dekalin und Alkane mit mehr als 6 Kohlenstoffatomen sowie Gemische derartiger Lösungsmittel. Besonders bevorzugt kommen die erfindungsgemäß hergestellten Produkte lösungsmittelfrei zum Einsatz.

Bei den erfindungsgemäßen Isocyanatverbindungen handelt es sich um wertvolle, unter dem Einfluß von Luftfeuchtigkeit und gegebenenfalls Luftsauerstoff aushärtbare Bindemittel für Beschichtungsmaterialien.

Desweiteren werden die erfindungsgemäß hergestellten Polyisocyanate als Vernetzerkomponente in 2-K-Beschichtungen eingesetzt. Hierbei finden die in der Polyurethanchemie üblichen isocyanatreaktiven Verbindungen Verwendung. Vorzugsweise werden hierbei hydroxyfunktionelle Polyether, Polyester, Polycarbonate, Polyacrylate, Polyamide bzw. Mischtypen eingesetzt.

In blockierter Form können die erfindungsgemäß hergestellten Verbindungen auch in thermohärtenden Beschichtungssystemen Anwendung finden.

Neben den erfindungsgemäßen Verfahrensprodukten und gegebenenfalls mitzuverwendenten weiteren Bindemittelkomponenten können in den Beschichtungen auch andere Hilfs- und Zusatzmittel mitverwendet werden.

Als weitere Hilfsstoffe können in den erfindungsgemäßen Beschichtungsmaterialien auch beispielsweise die üblichen Benetzungsmittel, Verlaufsmittel, Hautverhinderungsmittel, Antischaummittel, Mattierungsmittel wie beispielsweise Kieselsäure, Aluminiumsilikate und hochsiedende Wachse, viskositätsregulierende Stoffe, Pigmente, Farbstoffe, UV-Absorber, Stabilisatoren gegen thermischen bzw. oxidativen Abbau eingesetzt werden.

Die nach dem erfindungsgemäßen Verfahren hergestellten Produkte können in oder als Beschichtungmaterial zur Beschichtung beliebiger Substrate wie beispielsweise Holz, Kunststoffe, Leder, Papier, Textilen, Glas, Keramik, Putz, Mauerwerk, Metalle oder Beton verwendet werden. Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Die nach dem erfindungsgemäßen Verfahren hergestellten Produkte zeichnen sich durch niedrige Viskositäten und guter Thermostabilität aus, wobei erstmalig thermostabile Allophanatgruppen enthaltende Polyisocyanate mit rein aromatischen Isocyanatgruppen und einheitlicher Reaktivität zugänglich sind. Hierbei werden Polyisocyanate erhalten, die in 1K- und 2K-Beschichtungen ohne einen mehrstufigen Aushärtemechanismus vernetzen.

Alle Angaben in "Teilen" und "%" beziehen sich auf das Gewicht.

### Beispiel 1

In einer mit Stickstoff gespülten Rührapparatur werden 815,4 g (3,0 mol) HD-Ocenol 110/130 (Produkt der Henkel KGaA, OHZ: 200-220, Iodzahl: 110-130, ca. 95 % Kohlenwasserstoffketten mit 18 Kohlenstoffatomen) vorgelegt und bei 70°C mit 168 g (1,0 mol) 1,6-Hexamethylendiisocyanat versetzt. Nach ca. 3 Stunden Reaktionsdauer bei einer Temperatur von 90°C ist der NCO-Gehalt der entstandenen Urethankomponente auf unter 0,1 % gefallen. Nachfolgend wird durch Zugabe von 1740 g ( 10,0 mol) Toluylendiisocyanat (TDI, 2,4- zu 2,6-Isomerenverhältnis = 80:20) und anschließende Katalyse mit 140 mg Zinkstearat bei 88°C die Allophanatisierungsreaktion gestartet. Nach 9 Stunden wird die Reaktion durch Zugabe von 140 mg Isophthaloyldichlorid bei einem NCO-Gehalt von 24,2 % beendet. Das überschüssige Toluylendiisocyanat wird im Anschluß durch Dünnschichtdestillation im Hochvakuum (0,1 - 0,3 mbar) bei einer Temperatur von 150°C abgetrennt.

### Produktdaten:

- Ausbeute:: 1536 g
- Viskosität:: 3300 mPa·s/bei 23°C
- fr. TDI-Gehalt:: 0,04 %
- NCO-Gehalt (i):: 9,1 %

### Beispiel 2

In einer mit Stickstoff gespülten Rührapparatur werden 286 g (2,2 mol) 2-Ethylhexanol vorgelegt und bei 70°C mit 168 g (1,0 mol) 1,6-Hexamethylendiisocyanat versetzt. Nach ca. 3 Stunden Reaktionsdauer bei einer Temperatur von 90°C ist der NCO-Gehalt der entstandenen Urethankomponente auf unter 0,1 % gefallen. Nachfolgend wird durch Zugabe von 1914 g (11,0 mol) Toluylendiisocyanat (TDI, 2,4- zu 2,6-Isomerenverhältnis = 80:20) und anschließende Katalyse mit 100 mg Zinkacetylacetonat bei 88°C die Allophanatisierungsreaktion gestartet. Nach 9 Stunden wird die Reaktion durch Zugabe von 100 mg Isophthaloyldichlorid bei einem NCO-Gehalt von 29 % beendet. Das überschüssige Toluylendiisocyanat wird im Anschluß durch Dünnschichtdestillation im Hochvakuum (0,1 - 0,3 mbar) bei einer Temperatur von 150°C abgetrennt. Das hochviskose Produkt hat gelöst in Butylacetat folgende Eigenschaften:
- Festkörpergehalt:: 85 %
- Viskosität:: 400 mPa·s/bei 23°C
- fr. TDI-Gehalt:: 0,04 %
- NCO-Gehalt:: 10,68 %

### Beispiel 3

In einer mit Stickstoff gespülten Ruhrapparatur werden 271,8 g (1,0 mol) HD-Ocenol 110/130 (siehe Beispiel 1) vorgelegt und bei 90°C mit 84 g (0,5 mol) 1,4-Tetramethylendiisocyanat (BDI) versetzt. Nach ca. 8 Stunden Reaktionsdauer bei einer Temperatur von 95°C ist der NCO-Gehalt des entstandenen Diurethans auf unter 0,2 % gefallen. Nachfolgend wird durch Zugabe von 870 g (5,0 mol) TDI (siehe Beispiel 1) und anschließende Katalyse mit 60 mg Zinkoctoat bei 88°C die Allophanatisierungsreaktion gestartet. Nach 5 Stunden ist ein NCO-Gehalt von 30,5 % erreicht. Das überschüssige TDI wird im Anschluß durch Dünnschichtdestillation im Hochvakuum (0,1 - 0,3 mbar) bei einer Temperatur von 150°C abgetrennt.

### Produktdaten:

- Ausbeute:: 488 g
- Viskosität:: 5000 mPa·s/bei 23°C
- fr. TDI-Gehalt:: < 0,03 %
- NCO-Gehalt (i):: 7,9 %

### Beispiel 4

In einer mit Stickstoff gespülten Rührapparatur werden 203,3 g (1,0 mol) tech. Lorol (Produkt der Henkel KGaA, OHZ: 265-275, Iodzahl: < 0,5, Kohlenwasserstoffketten mit 12 bis 18 Kohlenstoffatomen) mit 500 g (0,125 mol) eines durch Propoxylierung von Propylenglykol und anschließende Ethoxylierung des Propoxylierungsproduktes hergestellten Polyethers (PO/EO-Mischverhältnis 79/21, OHZ: 28,5) vorgelegt und bei 70°C mit 105 g (0,625 mol) 1,6-Hexamethylendiisocyanat versetzt. Nach ca. 13 Stunden Reaktionsdauer bei einer Temperatur von 100°C ist der NCO-Gehalt des entstandenen Diurethans auf unter 0,2 % gefallen. Nachfolgend wird durch Zugabe von 652,5 g (3,75 mol) TDI (siehe Beispiel 1) und anschließende Katalyse mit 73 mg Zinkstearat bei 85°C die Allophanatisierungsreaktion gestartet. Nach 9 Stunden ist ein NCO-Gehalt von 17,3 % erreicht und die Reaktion wird mit 70 mg Isophthaloyldichlorid abgestoppt. Das überschüssige TDI wird im Anschluß durch Dünnschichtdestillation im Hochvakuum (0,1 - 0,3 mbar) bei einer Temperatur von 140°C abgetrennt.

### Produktdaten:

- Ausbeute:: 995 g
- Viskosität:: 7500 mPa·s/bei 23°C
- fr. TDI-Gehalt:: < 0,03 %
- NCO-Gehalt (i):: 5,4 %

### 5. Vergleichsbeispiel (nicht erfindungsgemäß)

In einer mit Stickstoff gespülten Rührapparatur werden 1392 g (16 val) Toluylendiisocyanat (2,4- und 2,6-Isomerenverhältnis = 80:20) vorgelegt und bei 60°C mit 158 g (1 val) Dodecanol versetzt. Nach ca. 2 Stunden Reaktionsdauer unter Stickstoffatmosphäre erhöht man die Reaktionstemperatur auf 120 °C und katalysiert mit 150 ppm Zinn-(II)-octoat. Nach einer Allophanatisierungsdauer von ca. 16 Stunden ist ein NCO-Gehalt von 37,5 % erreicht. Nachfolgend wird das überschüssige Diisocyanat durch Dünnschichtdestillation im Hochvakuum (0,1 - 0,3 mbar) bei einer Temperatur von 150°C abgetrennt.

### Produktdaten:

- Ausbeute:: 364 g
- NCO-Gehalt:: 9,4 %
- Viskosität:: 400 000 mPa·s
- fr. TDI-Gehalt:: 1,7 %

Die erzeugten Homoallophanatgruppen zeigen während der destillativen Abtrennung des überschüssigen Monomers eine unzureichende Thermostabilität und spalten so zum Teil in Urethangruppen und freies Monomer zurück. Dies läßt sich unter anderem durch ¹³C-NMR-spektroskopischen Untersuchung nachweisen. Trotz relativ hohem Monomerengehalt, der eine Verdünnung des Polyisocyanats bewirkt, handelt es sich bei dem erhaltenen Verfahrensprodukt um ein hochviskoses Harz.

Auch durch eine nochmalige destillative Abtrennung des monomeren Diisocyanats mittels Dünnschichtdestillation läßt sich der TDI-Gehalt nicht unter 0,5 % absenken.

### Beispiel 6 (Verwendung der erfindungsgemäß hergestellten Produkte als 1K-Klarlack)

Das Polyisocyanat aus Beispiel 2 wird mit 0,22 % Dibutylzinndilaurat als Katalysator als 120 µm Naßfilm auf eine gereinigte Glasplatte appliziert und bei Raumtemperatur getrocknet. Der erhaltene hochglänzende Film weist folgende Eigenschaften auf:
- Sandtrocknung: 40 min.
- Grifftrocknung: 180 min.
- Pendelhärte nach 1 Tag (s): 154
- Pendelhärte nach 7 Tagen (s): 172

## Patentansprüche

1. Verfahren zur Herstellung Heteroallophanatgruppen enthaltender Polyisocyanatverbindungen mit aromatisch gebundenen Isocyanatgruppen, dadurch gekennzeichnet, daß eine
a) im wesentlichen isocyanatgruppenfreie Di- und/oder Polyurethankomponente, hergestellt aus
a1) einer linear aliphatischen Isocyanatkomponente mit
a2) organischen Hydroxylverbindungen einer OH-Funktionalität von im Mittel 1 bis 1,75 unter Allophanatbildung mit
b) einer Isocyanatkomponente die mindestens 90 Gew.-% 2,4- oder 2,6-Diisocyanatotoluol bzw. deren Mischungen enthält,
in einem Verhältnis von NCO- zu Urethangruppen von 3:1 bis 100:1 umgesetzt wird und im Anschluß die überschüssige destillierbare Monomerkomponente b) bis auf einen Gehalt von unter 0,5 % entfernt wird.

2. Verfahren nach Anspruch 1, dadurch gekennzeichnet, daß als linear aliphatische Isocyanatkomponente a1) Hexamethylendiisocyanat eingesetzt wird.

3. Verfahren nach Anspruch 1, dadurch gekennzeichnet, daß als Alkoholkomponente ausschließlich monofunktionelle Alkohole mit einer Kettenlänge von durchschnittlich 12 bis 22 Kohlenstoffatomen eingesetzt wird.

4. Verfahren nach Anspruch 1, dadurch gekennzeichnet, daß zur Allophanatbildung ein Katalysator auf Basis von Zinkverbindungen eingesetzt wird.

5. Verwendung der nach Anspruch 1 hergestellten Polyisocyanate als Bindemittel in 1K-Beschichtungssystemen.

6. Verwendung der nach Anspruch 1 hergestellten Polyisocyanate als Bindemittel in 2K-Beschichtungssystemen.
